(19) Europäisches Patentamt
European Patent Office
Office européen des brevets

(11) **EP 2 897 320 B1**

## (12) EUROPEAN PATENT SPECIFICATION

(45) Date of publication and mention of the grant of the patent:
**12.10.2016 Bulletin 2016/41**

(51) Int Cl.:
***H04L 9/06*** (2006.01)

(21) Application number: **14305064.9**

(22) Date of filing: **17.01.2014**

(54) **Undetectable encryption based on m-grams permutations**

Nicht detektierbare Verschlüsselung basierend auf der Permutation von m-Grammen

Chiffrement non détectable basé sur des permutations de m-grammes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.07.2015 Bulletin 2015/30**

(73) Proprietor: **ALCATEL LUCENT**
**92100 Boulogne-Billancourt (FR)**

(72) Inventors:
• **Jacquet, Philippe**
**91620 NOZAY (FR)**
• **Milioris, Dimitrios**
**91620 NOZAY (FR)**

(74) Representative: **Berthier, Karine**
**Alcatel-Lucent International**
**148/152, route de la Reine**
**92100 Boulogne-Billancourt (FR)**

(56) References cited:
**US-B1- 6 823 068**

• **MIGUEL A MARTNEZ-PRIETO ET AL: "Natural Language Compression on Edge-Guided text preprocessing", INFORMATION SCIENCES, AMSTERDAM, NL, vol. 181, no. 24, 23 July 2011 (2011-07-23), pages 5387-5411, XP028318318, ISSN: 0020-0255, DOI: 10.1016/J.INS.2011.07.039 [retrieved on 2011-08-03]**
• **VASILIY A USTIMENKO: "Graphs with Special Arcs and Cryptography", ACTA APPLICANDAE MATHEMATICAE, KLUWER ACADEMIC PUBLISHERS, DO, vol. 74, no. 2, 1 November 2002 (2002-11-01), pages 117-153, XP019226107, ISSN: 1572-9036, DOI: 10.1023/A:1020686216463**
• **James Brofos: "Cryptography on the Computer: MATLAB's Code-Breaking Capabilities 1", Ebook. Pg, 1 May 2012 (2012-05-01), XP055121061, Retrieved from the Internet: URL:http://www.cs.dartmouth.edu/~james/pdf s/Brofos_MCMC_Essay.pdf [retrieved on 2014-06-02]**

**Description**

FIELD OF THE INVENTION

The invention relates to technical domain of data encryption for transmission over an open communication channel.

In particular, it may apply to the field of text encryption over data communication networks like the Internet.

BACKGROUND OF THE INVENTION

Open communication channels allow transmitting information between peers by using an existing networking infrastructure, wherein malicious actions can be undertaken to intercept the information.

For this reason, some data encryption techniques are sometimes implemented to avoid sensible data to be read and known by entities other than the allowed peers (e.g. the receiver and the emitter).

Sensible data may be of various types, including data transmitted between banks, between customers and virtual market places; or any business-to-business important communication, etc.

Many research and development have been undertaken in this field to improve the performances of the encryption and security mechanisms, so as to dramatically reduce the probability of encrypted transmitted data to be hacked and finally decrypted by a malicious entity.

However, each progress in this direction is usually to be counterbalanced by a progress of the hacking technologies. In particular, the development of cloud-computing or other massively parallel computing arrangements make it possible to decipher even sophisticated encryption schemes.

Consequently, it is difficult today to ensure the invulnerability of any encryption mechanism, and this situation is a brake to further development of e-business applications and any applications implying transmission of sensible data.

SUMMARY OF THE INVENTION

The object of the present invention is to alleviate at least partly the above mentioned drawbacks and to improve the situation.

This object is achieved with a method for transmitting information over a communication channel between an emitter and a receiver, comprising

-   Determining by said emitter a syntax graph from said information, wherein said information corresponds to a first Eulerian circuit of said syntax graph, identified by a first index;
-   Determining from said syntax graph a second Eulerian circuit identified by a second index provided by an encoding function applied on said first index;

-   Transmitting said second Eulerian circuit from said emitter to said receiver;
-   Determining by said receiver a syntax graph from said second Eulerian circuit;
-   Determining from said syntax graph said first Eulerian circuit corresponding to said information identified by said first index provided by applying on said second index a reverse encoding function.

Preferred embodiments comprise one or more of the following features, which can be taken separately or together, either in partial combination or in full combination.

-   said information is a text.
-   said emitter and said receiver shares said encoding function and said reverse encoding function, prior to transmitting said information.
-   said encoding function and said reverse encoding function consist in applying an offset to said first, respectively second, index.

Another object of the invention concerns an emitter for transmitting information to a receiver over a communication channel, being adapted for:

-   determining a syntax graph from said information, wherein said information corresponds to a first Eulerian circuit of said syntax graph, identified by a first index;
-   determining from said syntax graph a second Eulerian circuit identified by a second index provided by an encoding function applied on said first index;
-   emitting said second Eulerian circuit

Preferred embodiments comprise one or more of the following features, which can be taken separately or together, either in partial combination or in full combination.

-   said information is a text.
-   said emitter is adapted to share with said receiver said encoding function and said reverse encoding function, prior to transmitting said information.
-   said encoding function consists in applying an offset to said first index.

Another object of the invention concerns a receiver for receiving information from an emitter over a communication channel, said receiver being adapted for:

-   receiving a second Eulerian circuit from said emitter, identifier by a second index;
-   determining a syntax graph from said second Eulerian circuit;
-   determining from said syntax graph a first Eulerian circuit corresponding to said information, identified by a first index provided by applying on said second index a reverse encoding function.

Preferred embodiments comprise one or more of the following features, which can be taken separately or together, either in partial combination or in full combination.

- said information is a text;
- said receiver is adapted to share with said emitter, said encoding function and said reverse encoding function, prior to transmitting said information;
- said reverse encoding function consists in applying an offset to said second index.

Another object of the invention concerns a communication network comprising at least an emitter and a receiver according as previously defined.

Another object of the invention concerns a computer program product comprising computer-executable instructions for performing the method as previously defined.

Still another object of the invention concerns a digital storage medium encoding a machine-executable program of instructions to perform such a method as previously defined.

Further features and advantages of the invention will appear from the following description of embodiments of the invention, given as nonlimiting examples, with reference to the accompanying drawings listed hereunder.

According to the invention, the transmission of encrypted data is performed so that this transmission is not detected and the malicious deciphering mechanisms are not undertaken.

BRIEF DESCRIPTION OF THE DRAWINGS

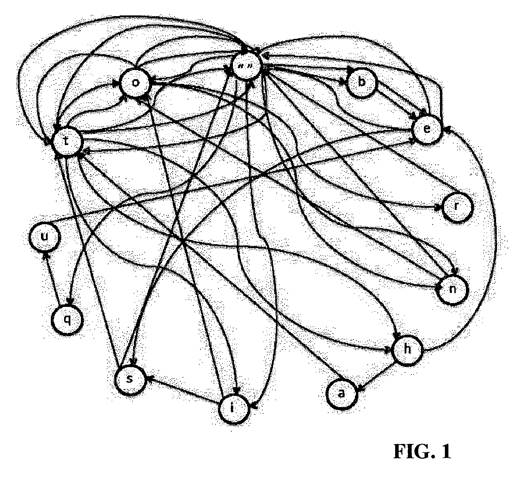

Fig. 1 shows an example for a syntax graph, corresponding to a 1-gram of a short text.

DETAILED DESCRIPTION OF THE INVENTION

The invention comprises transmitting information between an emitter and at least a receiver over an open communication channel. Such open communication channel can for example be a data network like the Internet, wherein the information is transmitted from nodes to nodes and prone to be intercepted by malicious applications during the transmission.

Such a channel can be wireline or wireless and the invention is independent of the underlying infrastructure put in place to convey the invention.

The originality of the invention is that the appearance of the transmitted information, although encoded, is not changed, so that malicious software applications become in difficulty in determining that a flow of information under study is encoded or not.

Consequently, being undetected, the encoded information will not be subject to massive deciphering techniques. The probability of the transmitted information to not be deciphered is therefore dramatically higher, regardless of the encoding scheme.

In addition, when a malicious deciphering application has detected an emitter or a receiver as transmitting encoded information (regardless of whether or not it managed at deciphering it), it may tag it, so as to trigger further actions, like systematically analyzing of its transmitted information, trying to infiltrate it to steal further information, etc.

Therefore, an additional and un-addressed technical problem solved by the invention consists in avoiding being determined by such an application the fact that encoded information is transmitted.

In other words, the invention lies in stealthily transmitting this information.

The invention applies in particular to text transmission, but can also apply to other types of information.

According to the invention, the encoded text, which is transmitted over the communication channel, is then also a text.

Any malicious application analyzing such information will detect a text, with a typical text format (words, sentences...), and detecting that it is encoded text would require a complex semantic analysis. In addition, such a semantic analysis would be made more difficult by having no information about the language used to write such a text.

This is made easier to understand with the example below:

Let's take as example the following to be transmitted:

"Up to now, the main methods used for text encryption are sophisticated algorithms that transform original data into encrypted binary stream. The problem is that such streams are easily detectable under an automated massive attack, because they are in very different format and aspect of non encrypted data, eg texts in natural language. This way any large scale data interception system would very easily detect the encrypted texts. The result of this detection is twofold. First detected encrypted texts can be submitted to massive decryption processes on large computing resources, and finally be deciphered. Second, even when the texts would not eventually be deciphered, the source or the destination of the texts are at least identified as hiding their communications and therefore can be subject to other intrusive investigations. In other words encryption does not protect against a massive spying attack if encrypted texts are easily detectable. "

A possible encoded text, according to the mechanisms of the invention can be as follows:

"In In other words encryptions and finally be deciphered, therefore can be submitted binary stream. This way any large communication does not protectable under an automated massive investination is twofold. First detect the texts can be decrypted texts are in very easily detection of this detectable. Up to now, they are easily detected encryption processes on large scale data into encrypted to massive deciphered. Second, even when the main methods used form original data intrusive spying resources, and as hiding attack if encrypted data, eg text encrypted aspect of non encrypted texts are attack, because the source or texts would very different for the encryption are easily detect against a massive at least identified algorithms that transformat and their computing the texts in natural language. The problem is that such streams are sophisticated texts. The result of the destigation system would not eventually be subject to other interceptions. In »

In this example, it is clear that the encoded text looks like an English text, and that it would requires either manual intervention to determine that it is not a normal text, or a very complex automatic semantic analysis.

In addition, the encoded text comprises only few grammatical or lexicographic errors, so that any detecting mechanisms based on first level errors will not detect anything and will be consider such an encoded text as "badly written normal text".

Accordingly, the encoded text will not be detected as encoded and no deciphering mechanism will be triggered.

According to the invention, the emitter determines a syntax graph from the information to be transmitted.

A syntax graph is a multi-graph G(V,E), in which the nodes represent all the possible N-grams of a given text T. The edge set contains the possible edges that connect a first m-gram A with a second m-gram B, if and only if the m-gram B follows immediately the N-gram A in the text T. In other words, B is obtained after a translation of one symbol of A in the original text T.

A m-gram is made of m consecutive symbols of the text T, including blank, punctuation, etc. This number m can be shared between the emitter and the receiver.

For instance, assuming that m=3, if the text is "ABCD", the 3-gram "BCD" follows immediately the 3-gram "ABC", and the syntax graph contains the nodes "ABC" and "BCD".

This syntax graph and the way to determine it appears more clearly on the example depicted in FIG. 1. This example corresponds to a short text T as follows, and, for the simplicity of the explanation, 1-grams are considered:

> T= "to be or not to be that is the question"
> 1-gram corresponds to a letter-based approach.

In this case, each node corresponds to a letter present in the text T, and each link corresponds to juxtaposition between 2 letters.

If a same juxtaposition is present several times, then the corresponding nodes are linked several times. For example, the juxtaposition of the letters "b" and "e" appears twice (in the word "be") and two arrows, on FIG. 1, link the node "be" to the node "e".

The text T is one of the Eulerian circuits of this Syntax graph.

An Eulerian circuit is a Eulerian path which starts and ends at a same node. An Eulerian path (or trail) is a path within the graph which visits every edge exactly once. Such path has been introduced when the mathematician Euler addressed the famous seven bridges of Königsberg problem.

There exists E(G) Eulerian paths, that we can here enumerate from 1 to E(G). This number E(G) can be computed in several ways, including by using the BEST theorem. This well-known BEST theorem is for example explained on the Wikipedia website, at the address:

> http://en.wikipedia.org/wiki/BEST_theorem

The text T cannot be retrieved directly from the syntax graph G, as it represents only one Eulerian circuit among E(G) possible Eulerian path. This number is very high.

The index of the Eulerian circuit corresponding to the text T is therefore required to determine back this text T from the syntax graph G. This index will be called hereafter the "first index".

From the syntax graph G, the emitter determines a second Eulerian circuit identified by a second index provided by an encoding function applied on the first index.

The encoding function may consist in applying an offset to the first index, but many other encoding functions can be applicable. The invention is independent of the precise embodiment for the encoding function.

Applying an offset consists in determining a second index I2 such as:

$$I2=(I1+\text{offset}) \bmod E(G)$$

wherein I1 is the first index.

More generally, the second index I2 can be written as:

$$I2=f(I1, E(G), k0)$$

wherein k0 a parameter or a set of parameters of the encoding function f. In case f is an offset-shifting function, k0 may represent this offset.

The function f should return an integer value, smaller than E(G).

The function, its parameters k0, and the size m of the m-grams may be built-in parameters fixed for any receivers and emitters undertaking the invention, or a configuration parameter than can be tuned by the users and/or transmitted by the emitter and the receiver(s) during a negotiation phase prior to the transmission of information. These aspects are let out of the invention itself.

Instead of the text T corresponding to a first Eulerian circuit, a second Eulerian circuit is transmitted to the receiver(s), identified by this second index I2. Such a second Eulerian circuit may resemble to the following character chain T':

> T' =" tor o bes the thatio que non be ist tot"

This second Eulerian circuit corresponds to an encoded text, as it is a permutation of the N-grams of the text T (here with N=1).

Even if it is possible to build the syntax graph G, it is not possible to determine the right Eulerian circuit (i.e. which corresponds to the original text T) without knowing the first index I1.

This second Eulerian circuit is then transmitted from the emitter to the receiver(s). The receiver may be unique, in case of one-to-one communication (unicast) or a plurality in case of one-to-many communication (multicast, anycast).

At reception of the encoded information T', the receiver can determine a syntax graph. This determination can be performed in the same way than previously described. The syntax graph determined at receiver's end is the same as the one determined at emitter's end.

Then, an inverse encoding function $f^{-1}$ is applied on the second index I2, so as to provide back the first index I1.

As explained previously, this inverse encoding function $f^{-1}$, and its potential parameters can be known by the receiver in various ways.

In the case the encoding function f is an offset-shifting function, the inverse encoding function is the inverse offset shifting function. In other words, the index I1 can be determined by the simple relationship:

$$I2=(I1-\text{offset}) \bmod E(G)$$

Knowing the syntax graph, the receiver can then easily determine the Eulerian circuit identified by the first index I1, which correspond to the original text T.

The invention has been described with reference to preferred embodiments. However, many variations are possible within the scope of the invention.

**Claims**

1. Method for transmitting information over a communication channel between an emitter and a receiver, **characterized in that** said method comprises

    - Determining by said emitter a syntax graph from said information, wherein said information corresponds to a first Eulerian circuit of said syntax graph, identified by a first index;
    - Determining from said syntax graph a second Eulerian circuit identified by a second index provided by an encoding function applied on said first index;
    - Transmitting said second Eulerian circuit from said emitter to said receiver;
    - Determining by said receiver a syntax graph from said second Eulerian circuit;
    - Determining from said syntax graph said first Eulerian circuit corresponding to said information identified by said first index provided by applying on said second index a reverse encoding function.

2. Method according to claim 1, wherein said information is a text.

3. Method according to any of claims 1 or 2, wherein said emitter and said receiver shares said encoding function and said reverse encoding function, prior to transmitting said information.

4. Method according to any of claims 1 to 3, wherein said encoding function and said reverse encoding function consist in applying an offset to said first, respectively second, index.

5. Emitter for transmitting information to a receiver over a communication channel, **characterized in that** said emitter is adapted for:

    - determining a syntax graph from said information, wherein said information corresponds to a first Eulerian circuit of said syntax graph, identified by a first index;
    - determining from said syntax graph a second Eulerian circuit identified by a second index provided by an encoding function applied on said first index;
    - emitting said second Eulerian circuit

6. Emitter according to claim 5, wherein said information is a text.

7. Emitter according to any of claims 5 or 6, wherein said emitter is adapted to share with said receiver said encoding function and said reverse encoding function, prior to transmitting said information.

8. Emitter according to any of claims 5 to 7, wherein said encoding function consists in applying an offset to said first index.

9. Receiver for receiving information from an emitter over a communication channel, **characterized in**

**that** said receiver is adapted for:

- receiving a second Eulerian circuit from said emitter, identified by a second index;
- determining a syntax graph from said second Eulerian circuit;
- determining from said syntax graph a first Eulerian circuit corresponding to said information, identified by a first index provided by applying on said second index a reverse encoding function.

10. Receiver according to claim 9, wherein said information is a text.

11. Receiver according to any of claims 9 or 10, wherein said receiver is adapted to share with said emitter, said encoding function and said reverse encoding function, prior to transmitting said information.

12. Receiver according to any of claims 9 to 11, wherein said reverse encoding function consists in applying an offset to said second index.

13. Communication network comprising at least an emitter according to any of claims 5 to 8 and a receiver according to any of claims 9 to 12.

14. Computer program product comprising computer-executable instructions for performing a method according to any of claims 1 to 4.

15. Digital storage medium encoding a machine-executable program of instructions to perform a method according to any of the claims 1 to 4.


**Patentansprüche**

1. Verfahren für das Übermitteln von Informationen über einen Kommunikationskanal zwischen einem Emitter und einem Empfänger, **dadurch gekennzeichnet, dass** besagtes Verfahren umfasst:

- das Bestimmen eines Syntaxgraphen aus besagten Informationen durch besagten Emitter, wobei besagte Informationen einem ersten Eulerkreis des besagten Syntaxgraphen entsprechen, identifiziert durch einen ersten Index;
- das Bestimmen eines zweiten Eulerkreises aus besagtem Syntaxgraphen, identifiziert durch einen zweiten Index, der bereitgestellt wird von einer auf besagten ersten Index angewendeten Codierfunktion;
- das Übermitteln besagten Eulerkreises von besagtem Emitter an besagten Empfänger;
- das Bestimmen eines Syntaxgraphen von besagtem zweitem Eulerkreis durch besagten Empfänger;
- das Bestimmen besagten ersten Eulerkreises von besagtem Syntaxgraphen, wobei besagter erster Eulerkreis besagten Informationen entspricht, die von besagtem erstem Index durch die Anwendung einer Codierungsumkehrfunktion auf besagen zweiten Index identifiziert wurden.

2. Verfahren nach Anspruch 1, wobei besagte Informationen ein Text sind.

3. Verfahren nach einem jeglichen der Ansprüche 1 oder 2, wobei besagter Emitter und besagter Empfänger besagte Codierfunktion und besagte Codierungsumkehrfunktion teilen, ehe besagte Informationen übermittelt werden.

4. Verfahren nach einem jeglichen der Ansprüche 1 bis 3, wobei besagte Codierfunktion und besagte Codierungsumkehrfunktion in der Anwendung eines Versatzes auf besagten ersten bzw. zweiten Index bestehen.

5. Emitter für die Übermittlung von Informationen an einen Empfänger über einen Kommunikationskanal, **dadurch gekennzeichnet, dass** besagter Emitter ausgelegt ist für:

- das Bestimmen eines Syntaxgraphen aus besagten Informationen, wobei besagte Informationen einem ersten Eulerkreis des besagten Syntaxgraphen entsprechen, identifiziert durch einen ersten Index;
- das Bestimmen eines zweiten Eulerkreises aus besagtem Syntaxgraphen, identifiziert durch einen zweiten Index, der bereitgestellt wird von einer auf besagten ersten Index angewendeten Codierfunktion;
- das Senden besagten zweiten Eulerkreises.

6. Emitter nach Anspruch 5, wobei besagte Informationen ein Text sind.

7. Emitter nach einem jeglichen der Ansprüche 5 oder 6, wobei besagter Emitter dafür ausgelegt ist, um mit besagtem Empfänger besagte Codierfunktion und besagte Codierungsumkehrfunktion zu teilen, ehe besagte Informationen übermittelt werden.

8. Emitter nach einem jeglichen der Ansprüche 5 bis 7, wobei besagte Codierfunktion in der Anwendung eines Versatzes auf besagten ersten Index bestehen.

9. Empfänger für den Empfang von Informationen von einem Emitter über einen Kommunikationskanal, **dadurch gekennzeichnet, dass** besagter Empfänger ausgelegt ist für:

- den Empfang eines zweiten Eulerkreises von besagtem Emitter, identifiziert durch einen zweiten Index;
- das Bestimmen eines Syntaxgraphen von besagtem zweitem Eulerkreis;
- das Bestimmen eines ersten Eulerkreises von besagtem Syntaxgraphen, wobei besagter erster Eulerkreis besagten Informationen entspricht, die von einem ersten Index durch die Anwendung einer Codierungsumkehrfunktion auf besagen zweiten Index identifiziert wurden.

10. Empfänger nach Anspruch 9, wobei besagte Informationen ein Text sind.

11. Empfänger nach einem jeglichen der Ansprüche 9 oder 10, wobei besagter Empfänger dafür ausgelegt ist, um mit besagtem Emitter besagte Codierfunktion und besagte Codierungsumkehrfunktion zu teilen, ehe besagte Informationen übermittelt werden.

12. Empfänger nach einem jeglichen der Ansprüche 9 bis 11, wobei besagte Codierungsumkehrfunktion in der Anwendung eines Versatzes auf besagten zweiten Index bestehen.

13. Ein Kommunikationsnetzwerk, mindestens einen Emitter nach einem beliebigen der Ansprüche 5 bis 8 und einen Empfänger nach einem beliebigen der Ansprüche 9 oder 12 umfassend.

14. Computerprogramm-Produkt mit von einem Computer ausführbaren Anweisungen zur Ausführung eines Verfahrens nach einem jeglichen der Ansprüche 1 bis 4.

15. Digitales Speichermedium, ein von einer Maschine ausführbares Programm mit Anweisungen zur Ausführung eines Verfahrens nach einem jeglichen der Ansprüche 1 bis 4 umfassend.

**Revendications**

1. Procédé de transmission d'informations sur un canal de communication entre un émetteur et un récepteur, **caractérisé en ce qu'**il comprend les étapes suivantes

- déterminer au moyen dudit émetteur un diagramme syntaxique à partir desdites informations, lesdites informations correspondant à un premier circuit eulérien dudit diagramme syntaxique, identifié par un premier index ;
- déterminer à partir dudit diagramme syntaxique un deuxième circuit eulérien identifié par un deuxième index fourni par une fonction de codage appliquée audit premier index ;
- transmettre ledit deuxième circuit eulérien entre ledit émetteur et ledit récepteur ;
- déterminer au moyen dudit récepteur un diagramme syntaxique à partir dudit deuxième circuit eulérien ;
- déterminer à partir dudit diagramme syntaxique ledit premier circuit eulérien correspondant auxdites informations identifié par ledit premier index fourni en appliquant audit deuxième index une fonction de codage inverse.

2. Procédé selon la revendication 1, dans lequel lesdites informations sont un texte.

3. Procédé selon l'une quelconque des revendications 1 et 2, dans lequel ledit émetteur et ledit récepteur partagent ladite fonction de codage et ladite fonction de codage inverse, avant de transmettre lesdites informations.

4. Procédé selon l'une quelconque des revendications 1 à 3, dans lequel ladite fonction de codage et ladite fonction de codage inverse consistent à appliquer un décalage audit premier, respectivement deuxième, index.

5. Émetteur pour transmettre des informations à un récepteur sur une voie de communication, **caractérisé en ce que** ledit émetteur est adapté pour :

- déterminer un diagramme syntaxique à partir desdites informations, lesdites informations correspondant à un premier circuit eulérien dudit diagramme syntaxique, identifié par un premier index ;
- déterminer à partir dudit diagramme syntaxique un deuxième circuit eulérien identifié par un deuxième index fourni par une fonction de codage appliquée audit premier index ;
- émettre ledit deuxième circuit eulérien.

6. Émetteur selon la revendication 5, dans lequel lesdites informations sont un texte.

7. Émetteur selon l'une quelconque des revendications 5 et 6, dans lequel ledit émetteur est adapté pour partager avec ledit récepteur ladite fonction de codage et ladite fonction de codage inverse, avant de transmettre lesdites informations.

8. Émetteur selon l'une quelconque des revendications 5 à 7, dans lequel ladite fonction de codage consiste à appliquer un décalage audit premier index.

9. Récepteur pour recevoir des informations à partir d'un émetteur sur une voie de communication, **ca-**

**ractérisé en ce que** ledit récepteur est adapté pour :

- recevoir un deuxième circuit eulérien à partir dudit émetteur, identifié par un deuxième index ;
- déterminer un diagramme syntaxique à partir dudit deuxième circuit eulérien ;
- déterminer à partir dudit diagramme syntaxique un premier circuit eulérien correspondant auxdites informations, identifié par un premier index fourni en appliquant audit deuxième index une fonction de codage inverse.

10. Récepteur selon la revendication 9, dans lequel lesdites informations sont un texte.

11. Récepteur selon l'une quelconque des revendications 9 et 10, dans lequel ledit récepteur est adapté pour partager avec ledit émetteur ladite fonction de codage et ladite fonction de codage inverse, avant de transmettre lesdites informations.

12. Récepteur selon l'une quelconque des revendications 9 à 11, dans lequel ladite fonction de codage inverse consiste à appliquer un décalage audit deuxième index.

13. Réseau de communication comprenant au moins un émetteur selon l'une quelconque des revendications 5 à 8 et un récepteur selon l'une quelconque des revendications 9 à 12.

14. Produit de programme informatique comprenant des instructions exécutables par ordinateur pour exécuter un procédé selon l'une quelconque des revendications 1 à 4.

15. Support de stockage numérique codant un programme d'instructions exécutable par une machine pour exécuter un procédé selon l'une quelconque des revendications 1 à 4.

**FIG. 1**